# EUROPEAN PATENT SPECIFICATION

(11) **EP 1 739 026 B1**
(45) Date of publication and mention of the grant of the patent: **31.12.2008**
(21) Application number: 06016967.9
(22) Date of filing: 19.01.2004
(51) Int. Cl.: B65D 39/00, B65D 41/00, B65D 81/26, B65D 81/28, B65D 23/02, B65D 25/14

(54) **Acetaldehyde scavenging by addition of active scavengers to bottle closures**
Flaschenverschlüsse mit acetaldehydaufnehmenden Komponenten
Bouchons de bouteilles comprenant des agents absorbant l'acétaldéhyde

(30) Priority: 29.01.2003 US 353411
(43) Date of publication of application: 03.01.2007
(62) Divisional of application: 04000992.0
(73) Proprietor: EASTMAN CHEMICAL COMPANY, Kingsport TN 37660 (US)
(72) Inventor: Howell, Earl Edmondson Jr., Kingsport TN 37664 (US); Ponasik, James Allen Jr., Blountville TN 37617 (US)
(74) Representative: Wibbelmann, Jobst

(56) References cited:
- EP-A- 0 969 047
- WO-A-01/30899
- WO-A-94/29378
- US-B1- 6 274 212

## Description

### 1. Field of the Invention

The invention pertains to compositions containing acetaldehyde scavengers in polyethylene terephthalate packaging, and more particularly to polyethylene terephthalate packaging closures containing acetaldehyde scavengers.

### 2. Background of the Invention

The polyester container market for still and carbonated water has experienced exceptional growth over the past several years. The material of choice for these markets is increasingly polyethylene terephthalate (PET), which combines excellent mechanical and optical properties. Unfortunately, PET contains a measurable level of residual acetaldehyde (AA), which is produced by thermal degradation of the polymer during synthesis and processing. When polyesters containing ethylene glycol as one of the starting materials are melted, a decomposition reaction occurs which produces acetaldehyde (AA). The amount of acetaldehyde formed is a function of the temperature and the time that the polymer is held in the melt, the polymerization catalyst and stabilizers used in the manufacturing process, the molecular weight of the polymer, the end group concentration of the polymer, the process used to form the finished package and the variables of that process such as temperature, shear rate, residence time, etc. A portion of the AA produced remains within the quenched polymer/package and can migrate from and through the container wall and enter the package's contents. Although AA is a naturally occurring flavorant which is used in number of food and beverage items, consumers may find the flavor undesirable in some foods and beverages.

For example, the fruity flavor that AA can impart may be considered undesirable in a bottled water where the consumer expects a "clean" taste. The taste threshold for AA in water is in the 10 to 20 parts per billion range, requiring bottle perform AA concentrations of 1 to 2 parts per million. Over time, the residual AA leaches into the water, imparting an undesirable taste and smell to the product. It is not surprising, therefore, that there has been a considerable amount of work done to produce PET with lower levels of AA.

Attempts at controlling the generation of AA in PET packaging have focused on manufacturing process modifications impacting the melt phase polymerization of polyethylene terephthalate or the injection molding stage for the manufacture of preforms suitable for blow molding or thermoforming, or on the modification of the polyester polymer backbone, or on modifying the composition through the addition of a variety of AA scavenging additives to the polyester composition by blending a scavenging additive with the resin in a melt or by pellet/pellet blending at injection molding to scavenge the AA from the polymer before it can migrate into the product.

These efforts have met with some degree of success, but problems with some AA generation persist. For example, in spite of formulating a polyester polymer backbone which generates low AA in the melt phase, and the addition of suitable AA scavengers in the melt phase polymerization step or in the injection molding stage, and the use of process controls in the melt phase polymerization step adapted to minimize the generation of AA, the process conditions best adapted to reduce the cycle time for the manufacture of preforms can also lead to the formation of small amounts of additional acetaldehyde, and residual amounts of acetaldehyde may not be scavenged by the addition of scavengers to the polymer. The additional acetaldehyde formed and the residual acetaldehyde in the walls of the container can, over time, migrate out of the polymer into the vapor space above the contents contained in the package. Small amounts of acetaldehyde in the vapor space, e.g. in the range of 5 to 250 ppb can affect the taste of some beverages, including water. AA scavenger additive levels in the package resin may not be sufficient to effectively eliminate all acetaldehyde in the resin, resulting in small amounts of acetaldehyde migrating into the containers vapor space and it's contents over time. Thus, there remains a need to further reduce the level of acetaldehyde in packaging. Because acetaldehyde migrating into the package will establish an equilibrium concentration distribution between the package's contents and the vapor space above the liquid, scavenging acetaldehyde from the vapor space offers an opportunity to remove acetaldehyde from the container after manufacture of the package and subsequent filling. Scavenging acetaldehyde from the container's vapor space will immediately result in a re-equilibration of the acetaldehyde concentration between the package's contents and the container's vapor space. In this manner, nearly all of the acetaldehyde that migrates from the walls of the container into the package's vapor space or its contents may eventually be removed.

### 3. Brief Summary of the Invention

We have discovered that the generation of AA from PET resin may be controlled not only by process modifications to the melt and injection molding stagers, and by the addition of AA scavenging additives to the polymer ultimately forming the package, but that the level of acetaldehyde in a package may also be controlled by reducing AA levels in the vapor spaces of the formed package as the AA migrates from the walls of the PET container.

The invention is set forth in greater detail in the attached claims.

### 4. Detailed Description of the Invention

This invention details a robust method for scavenging aldehydes, such as acetaldehyde, from the vapor space of the packaged food or beverage using a process that is independent of the resin end group population, the processing conditions used in the fabrication of the main body of the package and which does not impact the appearance or performance of the polyester container.

Most polyester packaging solutions involve two primary components: the sealable container body, and a closure, or cap. The closure is typically produced from a polymer other than PET; although it need not be in all cases. Generally, the closure composition is a thermoplastic polymer, and is selected from among polyethylene, polypropylene, poly (vinyl chloride) polymers, copolymers of ethylene and a vinyl ester, such as polyethylene vinyl acetate ("EVA"), ethylene vinyl alcohol, polyester polymers and copolymers, in particular polyethylene terephthalate, and olefin homopolymer and copolymers, polyurethane, polycarbonates, polyacrylates, polyethers, polyketones, polyarylates and the like. Most closures are plastic screw threaded caps, and most of these are injection molded. The closure must be capable of providing a sealing contact with the body of the container to prevent the vapor overhead from escaping. Providing a sealed package is especially important to preserve carbonation, and to keep the contents sanitary.

Polyethylene terephthalate based polyesters useful in preparing bottles of the present invention can be prepared by conventional polycondensation procedures well-known in the art. Such processes include direct condensation of the dicarboxylic acid(s) with the diol(s) or by ester interchange using a dialkyl dicarboxylate. For example, a dialkyl terephthalate such as dimethyl terephthalate is ester interchanged with the diol(s) at elevated temperatures in the presence of a catalyst. The polyesters may also be subjected to solid state polymerization methods.

The polyesters useful as the polymer for the bottle have an ItV of about 0.55 to about 1.5 dUg, preferably from 0.65 to about 1.1 dL/g, when measured as a solution of polymer dissolved in a mixture comprised of 60 % by weight phenol and 40 % by weight of 1,1,2,2-tetrachloroethane.

The acetaldehyde scavenger can be blended into the closure material of the container, it can be incorporated into the liner material, it can be deposited as a coating onto the inner surface of the closure, or it can be laminated onto the inner surface of the closure facing the vapor space. If desired, the scavenger may also be placed between the lid and the liner as a separate layer. In the event that the scavenger layer is disposed between the inner surface of the closure and a liner, the liner in this case should be permeable to acetaldehyde or any other aldehyde species to be scavenged. Otherwise, there are no constraints placed on the nature of the liner material used.

The liner is typically used to provide a tight seal against the container body, preventing the exchange of gases to and from the contents of the package. Many of the liners are self weldable with the application of heat at low temperatures. The liner also may contain antiblock and antifog additives, as well as oxygen scavengers. A wide variety of materials can be used as a liner. Examples of useful polymers for liners can be selected from the among suitable materials used to make the closure, that is, thermoplastic polymers such as ethylene vinylacetate (EVA) having a vinyl acetate/ethylene weight ratio of 5-20%: 1%, PVC, polyurethane, PET, and polyolefins such as polyethylene, including LDPE, branched or unbranched, having a density ranging from about 0.915 - 0.925, LLDPE having a density ranging from 0.920 to 0. 924, and very low density polyethylene having density below 0. 910 where sealability is desired, or HDPE having a density ranging from about_0.94 to_0.96 g/cc where sealability is not critical parameter; homopolymers of polypropylene or copolymers of polypropylene with ethylene having an ethylene content of 3-10% by weight; acrylates and methacrylate polymers from compounds such as ethylene (meth)acrylic acid, ethylene acrylic acid, and ethylene n-butyl acrylate, and the salts thereof. It is preferred to use a polymer material which does not generate acetaldehydes over time in order to minimize the amount of scavenger needed in the liner or closure.

In one embodiment, there is provided a liner in contact with the closure for a polyethylene terephthalate package. One surface of the liner contacts the inner surface of the closure, while the other surface of the liner, the vapor surface, is disposed and faces the vapor space above a fluid in the container. The liner material containing the scavenging compound is in direct contact with the vapor space on its vapor surface, meaning that in this embodiment, the acetaldehyde does not need to penetrate an intermediate layer to contact the liner containing the scavenger because the liner contacts the vapor space directly without the presence of a polymer layer or other barrier between the vapor space and the liner.

In this embodiment, the scavenger is incorporated into the liner polymer or coated on the liner polymer, preferably incorporated into the liner polymer. The presence of the scavenger in the liner may be due to blending the scavenger with the liner polymer or by pre-reacting the scavenger with the liner polymer or by copolymerizing the scavenger with the liner polymer during polymerisation of the liner polymer such that the scavenger is reacted into the backbone of the polymer or grafted onto the liner polymer backbone. In this embodiment, the scavenger reacts with acetaldehyde contained in a vapor space under closure conditions. Closure conditions are conditions effective to seal the closure against the body of the container.

The bottle is a polyethylene terephthalate bottle containing a fluid such as water.

According to the invention the acetaldehyde levels may be reduced in a vapor space located between a closure sealed to a polyethylene terephthalate bottle and the contents contained within a polyethylene terephthalate, bottle, comprising contacting a) a vapor comprising acetaldehyde in the vapor space with b) a closure comprising the compound effective for scavenging acetaldehyde, and continuously scavenging acetaldehyde from the vapor at a temperature less 50°C, preferably less than 40°C. This process may be used to scavenge acetaldehyde at 25°C or less and even 15°C or less. The temperature values are measured by the temperature to which the vapor space is subjected for at least 0.5 hours, which is about the time necessary to equilibrate the temperature of the package contents with ambient surroundings. Since the temperature values are measured by the applied temperature, the temperature values are independent of the pressure generated inside the sealed package. By a sealed closure is meant the conventional seal applied to the package for the market into which the package is sold.

This process is unlike conventional scavenging schemes which attempt to capture acetaldehyde in the polymer melt during melt phase manufacture or during injection blow molding as a liquid/gas interaction. In this case, the scavenger compound operates to scavenge acetaldehyde in a solid/gas interaction, wherein the scavenger operates in the solid phase to scavenge acetaldehyde from a gas phase. Moreover, unlike conventional scavenging schemes which capture acetaldehyde at the high temperatures of the melt, e.g. greater than 200°C, the process of the invention provides for acetaldehyde capture at lower temperatures. Since many beverages are refrigerated, the process has the advantage of scavenging at a wide range of lower temperatures, even down to temperatures above the freezing temperatures of the package contents. Finally, the process of the invention provides for the continual scavenging of acetaldehyde. Thus, scavenging will continue for so long as a significant amount of acetaldehyde migrates into the container vapor space or until such time as the closure is unsealed. Acetaldehyde will continuously migrate from the liquid phase, into the vapor space because as the acetaldehyde is captured by the scavenger, more acetaldehyde will diffuse into the vapor space, thus providing a continuous process for-scavenging acetaldehyde rather than a one time scavenging as experienced in the melt applications.

In an alternative embodiment, there is provided a polyethylene terephthalate package, a closure, and a vapor space above the fluid and in contact with the closure, where the closure itself contains a compound effective to react with acetaldehyde under closure conditions. In this embodiment, a liner is not needed and the scavenger is incorporated directly into the closure itself.

The process for incorporating the scavenger into the closure or the liner can be any conventional process known for combining two compounds or polymers. Typical processes include dry blending pellets into an extruder or injection molding machine by the addition of the scavenger neat or as a concentrate or in a carrier to a feed of bulk polymer to the extruder. Alternatively, the scavenger can be added neat, as a concentrate, or in a carrier to a suitable reaction vessel used to manufacture the closure or liner resin. If desired, the scavenger can be deposited onto a support such as silica or a zeolite, which is then compounded into a polymer melt used to make the closure or liner.

In addition to scavenging acetaldehyde, many of the scavengers are capable of scavenging other aldehydes or ketones, which would be useful in other applications. Non-limiting examples of other aldehydes and ketones include formaldehyde, propionaldehyde, acrolein, butyraldehyde, benzaldehyde, acetone, cylopentanone, and the like.

The level of scavenger selected should be based on the anticipated amount of aldehyde present in the vapor space of the container and generated from the walls of the container. Generally, the minimal level of scavenger selected should be slightly more than one mole of scavenger per mole of acetaldehyde. Higher levels may be required when such factors as mixing of the scavenger in a support, diffusion of the aldehyde through the support and desired rate of scavenging are considered.

Typical amounts of scavenger begin at 25 ppm, more preferred are at least 50 ppm, based on the weight of the polymer used to make either the closure or liner, depending on where the scavenger is incorporated. Usually, no more than 2000 ppm, and in many cases not more than 500 ppm of scavenger are needed to effectively scavenge the acetaldehyde generated from the small residual amount migrating from the walls of the container into the vapor space. Thus, in an alternative embodiment of the invention, there is provided a closure for a polyethylene terephthalate container, said closure comprising a polymer and a compound effective to react with acetaldehyde under closure conditions in an amount ranging from 25 ppm to 2000 ppm, preferably 50 to 500 ppm. There is also provided a polyethylene terephthalate package comprising a polyethylene terephthalate container and a closure, said closure comprising a polymer and a compound effective to react with acetaldehyde under closure conditions in an amount ranging from 25 ppm to 2000 ppm, preferably 50 to 500 ppm.

Although not more than 2000 ppm of scavenger is needed to effectively reduce the amount of acetaldehyde in the vapor space to acceptable levels, more can be used if the polyethylene terephthalate is of particularly poor quality, or if no scavenger has been added to the container polymer to reduce as far a possible the level of acetaldehyde within the polymer itself, or, more commonly, if the liner material or the closure material itself generates acetaldehyde. For example, many liners used as oxygen barriers generate aldehydes such as acetaldehyde. While the above embodiment contemplates the use of liners or closure materials which do not generate appreciable amounts of acetaldehyde, thereby requiring only small amounts of scavenger to reduce the acetaldehyde in the vapor space, in another embodiment, there is also provided a liner or closure containing a scavenger in an amount as high as 50 wt%, but commonly not more than about 10 wt.%, and in many instances not more than about 5 wt.%, based on the weight of the closure polymer or the liner polymer, especially in applications requiring the use of oxygen barrier compounds or polymers which generate or contribute to the generation of acetaldehyde.

Many other ingredients can be added to the compositions of the present invention to enhance the performance properties of the blends. For example, impact modifiers, surface lubricants, denesting agents, stabilizers, antioxidants, ultraviolet light absorbing agents, metal deactivators, colorants, phosphate stabilizers, fillers, and the like, can be included herein. All of these additives and the use thereof are well known in the art and do not require extensive discussions. Therefore, only a limited number will be referred to, it being understood that any of these compounds can be used so long as they do not hinder the present invention from accomplishing its objectives.

Desirable additives also include impact modifiers and antioxidants. Examples of typical commercially available impact modifiers well-known in the art and useful in this invention include ethylene/propylene terpolymers, styrene based block copolymers, and various acrylic core/shell type impact modifiers. The impact modifiers may be used in conventional amounts from 0.1 to 25 weight percent of the overall composition and preferably in amounts from 0.1 to 10 weight percent of the composition. Examples of typical commercially available antioxidants useful in this invention include, but are not limited to, hindered phenols, phosphites, diphosphites, polyphosphites, and mixtures thereof. Combinations of aromatic and aliphatic phosphite compounds may also be included.

The invention will be further illustrated by a consideration of the following examples, which are intended to be exemplary of the invention. All parts and percentages in the examples are on a weight basis unless otherwise stated.

### Examples.

PET inherent viscosity (I.V.) was measured at 25°C using 0.50 grams of polymer per 100 ml of a solvent consisting of 60% by weight phenol and 40% by weight tetrachloroethane.

Number average molecular weights of the polyamides were determined by ebulliometry using hexafluoroisopropanol.

### Example 1: Screening to Identify Active Acetaldehyde Scavengers

Various compounds were screened using the following protocol to determine their potential scavenging activity for acetaldehyde.

PET having a 0.72 dUg inherent viscosity as measured in a 60% phenol/40 % 1,1,2,2-tetrachloroethane solution (manufactured by Eastman Chemical Company) was dried for 8 hours at 60° C and 29 inches of mercury vacuum. The dried polymer was then extruded using a DACA 1/4" twin-screw extruder. The extruder's temperature was set at 300° C and the recirculation time within the extruder was three minutes. The extrudate was collected in a dewar-flask containing liquid nitrogen. The cold extrudate was then ground using a Wiley mill to produce a coarse grind. The ground material was screened and material which passed an 8-mesh screen but was retained on a 16-mesh screen was collected. Two grams of the screened PET was placed into a series of 20-ml headspace vials (Drachrom Catalog number DC-3120) which contained a pre-measured amount of the acetaldehyde scavenger being screened in an amount stated in Table 1. The vial was immediately capped with a standard septum cap (Drachrom Part No. DC-3127CAP) and placed into the sample feed carousel of a Hewlett Packard model 7694 Headspace sampler which was in turn connected to a Hewlett Packard Model 6890 gas chromatograph. The instrument was programmed to execute a variation of the industry standard French National Acetaldehyde generation test. In the utilized method the sample vials were heated to 150° C for sixty minutes to drive the AA from each sample into the vial's head-space. The vapor was then sampled and injected into the instrument's sample loop that was maintained at 160°C. Helium was used as the carrier gas.

Each sample was replicated at least once. A series of control samples, which contained only PET, was dispersed among the sample vials containing the various potential scavengers.

Typical results are shown below in Table I.

**Table 1**

| **Additive** | **Loading (Weight of additive/10⁶ g of PET, ppm)** | **Level of Acetaldehyde (g AA/10⁶ g Sample ppm)** | **% Reduction vs. Control set** |
|---|---|---|---|
| Average result for 5 control samples | 0 | 5.1 | --- |
| Anthranilamide | 5000 | 1.3 | 74.23 |
| Anthranilamide | 23000 | 0.1 | 98.03 |
| 4 -Aminobenzoic Acid | 9500 | 3.6 | 28.40 |
| 4- Aminobenzoic Acid | 24000 | 3.7 | 27.81 |
| Activated Carbon* | 6000 | 1.6 | 69.51 |
| Activated Carbon* | 18000 | 0.3 | 94.69 |
| Anthranilic Acid | 9900 | 0.9 | 82.89 |
| Anthranilic Acid | 24000 | 0.5 | 89.77 |
| Aspartic Acid | 27000 | 5.12 | 0.00 |
| Aspartic Acid | 11000 | 5.14 | 0.00 |

| | | | |
|---|---|---|---|
| * within the scope of the claims | | | |

### Example 2: Scavenging From Polyethylene Film

Ten grams of activated carbon pellets were added to ninety grams of polyethylene having an I.V. of about 0.935 and blended by tumbling or shaking the mixture. The resulting material is melt blended at 135° C or above in a single screw extruder equipped with a film dye. The resulting film, which can be of any suitable thickness, was subsequently cut into disks which are of a size to fit a standard headspace acetaldehyde GC vial. The vial was filled with 1 ml of a standard solution having a concentration of 1000g acetaldehyde per 1,000,000g of water, and allowed to sit undisturbed at room temperature for seven days. At the end of seven days the vapor space above the liquid is sampled via a gas-sampling syringe. Approximately 5 ml of gas was removed and injected into a 1-ml sample loop of a GC. The GC instrument used was an Alligent model 5890A gas chromatograph fitted with a gas sampling valve. The instrument's column was a Chrompack Poraplot Q. Detection was done with a flame ionization detector. The instrument's oven temperature was set to 145° C. Following sample injection the temperature was held at 145° for five minutes and then ramped up at 10° C/minute until the final temperature of 210°C was reached.

In addition to the polyethylene disks containing various scavengers, several "control" specimens are also prepared by inserting a disk prepared from extruded polyethylene containing no additive.

Table 2 below shows the relative scavenging effects of activated carbon:

**Table 2**

| **Compound** | **Loading (Weight % of Additive in Polyethylene)** | **Headspace AA concentration (gAA/10⁶ g polymer, ppm) After 7 Days at Room Temperature** |
|---|---|---|
| Blank | 0 | 111 |
| Activated Carbon | 4.2 wt % | 0 |

## Claims

1. A package comprising a closure, a polyethylene terephthalate bottle containing a fluid, and a vapor space in contact with the closure and above the fluid, said closure comprising a compound effective to capture or react with acetaldehyde under closure conditions, wherein said compound is selected from the group consisting of activated carbon, alumina, silica, talc and/or zeolites.

2. The package of claim 1, wherein said compound is a zeolite.

3. The package of claim 2, wherein said closure comprises a liner having a vapor surface in direct contact with the vapor space, wherein the liner contains said zeolite.

4. The package of claim 1, wherein said compound is a zeolite disposed between an inner surface of the closure and a liner, which is permeable to acetaldehyde.

5. The package of claim 1, wherein said closure comprises a liner having a vapor surface in direct contact with the vapor space, wherein the liner contains said compound.

6. The package of claim 1 or 5, wherein said closure contains activated carbon.

7. The package of claim 1, wherein said compound is activated carbon disposed between an inner surface of the closure and a liner, which is permeable to acetaldehyde.

8. The package of anyone of the preceding claims wherein the fluid is still or carbonated water.

9. The package of claim 8 wherein the amount of the compound effective to capture or react with acetaldehyde under closure conditions is from 50 ppm to 2000 ppm based on the weight of the closure polymer.

## Patentansprüche

1. Packung, umfassend einen Verschluss, eine Polyethylenterephthalat-Flasche, die eine Flüssigkeit enthält, und einen Dampfraum in Kontakt mit dem Verschluss und über der Flüssigkeit, wobei der Verschluss eine Verbindung umfasst, die wirksam ist, um unter Verschlussbedingungen Acetaldehyd einzufangen oder damit zu reagieren, wobei die Verbindung aus der Gruppe bestehend aus Aktivkohle, Aluminiumoxid, Siliciumdioxid, Talk und/oder Zeolithen ausgewählt ist.

2. Packung nach Anspruch 1, bei der die Verbindung ein Zeolith ist.

3. Packung nach Anspruch 2, bei der der Verschluss eine Auskleidung mit einer Dampfoberfläche in direktem Kontakt mit dem Dampfraum umfasst, wobei die Auskleidung den Zeolith enthält.

4. Packung nach Anspruch 1, bei der die Verbindung ein Zeolith ist, der zwischen einer inneren Oberfläche des Verschlusses und einer Auskleidung, die für Acetaldehyd durchlässig ist, angeordnet ist.

5. Packung nach Anspruch 1, bei der der Verschluss eine Auskleidung mit einer Dampfoberfläche in direktem Kontakt mit dem Dampfraum umfasst, wobei die Auskleidung die Verbindung enthält.

6. Packung nach Anspruch 1 oder 5, bei der der Verschluss Aktivkohle enthält.

7. Packung nach Anspruch 1, bei der die Verbindung Aktivkohle ist, die zwischen einer inneren Oberfläche des Verschlusses und einer Auskleidung, die für Acetaldehyd durchlässig ist, angeordnet ist.

8. Packung nach irgendeinem der vorangegangenen Ansprüche, bei der die Flüssigkeit stilles oder kohlensäurehaltiges Wasser ist.

9. Packung nach Anspruch 8, bei der die Menge der Verbindung, die wirksam ist, um unter Verschlussbedingungen Acetaldehyd einzufangen oder damit zu reagieren, 50 ppm bis 2000 ppm, bezogen auf das Gewicht des Verschlusspolymers, beträgt.

## Revendications

1. Emballage comprenant une fermeture, une bouteille en poly(téréphtalate d'éthylène) contenant un fluide, et un espace de vapeur en contact avec la fermeture et au-dessus du fluide, ladite fermeture comprenant un composé efficace pour capturer ou réagir avec l'acétaldéhyde dans des conditions fermées, dans lequel ledit composé est choisi parmi le groupe constitué de charbon actif, d'alumine, de silice, de talc et/ou de zéolites.

2. Emballage selon la revendication 1, dans lequel ledit composé est une zéolite.

3. Emballage selon la revendication 2, dans lequel ladite fermeture comprend une doublure ayant une surface de vapeur en contact direct avec l'espace de vapeur, dans lequel la doublure contient ladite zéolite.

4. Emballage selon la revendication 1, dans lequel ledit composé est une zéolite placée entre une surface intérieure de la fermeture et une doublure, qui est perméable à l'acétaldéhyde.

5. Emballage selon la revendication 1, dans lequel ladite fermeture comprend une doublure ayant une surface de vapeur en contact direct avec l'espace de vapeur, dans lequel la doublure contient ledit composé.

6. Emballage selon la revendication 1 ou 5, dans lequel ladite doublure contient du charbon actif.

7. Emballage selon la revendication 1, dans lequel ledit composé est un charbon actif placé entre une surface intérieure de la fermeture et une doublure, qui est perméable à l'acétaldéhyde.

8. Emballage selon l'une quelconque des revendications précédentes dans lequel le fluide est de l'eau plate ou gazeuse.

9. Emballage selon la revendication 8, dans lequel la quantité du composé efficace pour capturer ou réagir avec l'acétaldéhyde dans des conditions fermées est de 50 ppm à 2 000 ppm, par rapport au poids du polymère de la fermeture.
